# EUROPÄISCHE PATENTSCHRIFT

(11) **EP 0 567 856 B1**
(45) Veröffentlichungstag und Bekanntmachung des Hinweises auf die Patenterteilung: **06.12.1995**
(21) Anmeldenummer: 93106133.7
(22) Anmeldetag: 15.04.1993
(51) Int. Cl.: C09D 7/14, B01J 2/00, C08J 3/12, C08B 5/04, C09D 101/18

(54) **Verfahren zur Herstellung rieselfähiger, schnellöslicher Lackbindemittel-Granulate**
Method of preparing pourable, rapidly soluble lacquer-binder granules
Procédé de préparation de granulés de liant de vernis à solubilité rapide s'écoulant bien

(30) Priorität: 28.04.1992 DE 4213878
(43) Veröffentlichungstag der Anmeldung: 03.11.1993
(73) Patentinhaber: Wolff Walsrode Aktiengesellschaft, D-29655 Walsrode (DE)
(72) Erfinder: Kressdorf, Burkhard, Dr., W-3030 Walsrode (DE); Lühmann, Erhard, Dipl.-Ing., W-3036 Bomlitz 1 (DE); Hoppe, Lutz, Dr., W-3030 Walsrode (DE)
(74) Vertreter: Braun, Rolf, Dr.

(56) Entgegenhaltungen:
- DE-A- 2 100 412
- DE-B- 1 273 182
- DE-C- 2 338 852

## Beschreibung

Die Erfindung betrifft rieselfähige und schnellösliche Lackbindemittel-Granulate auf der Basis von Celluloseestern, insbesondere von Cellulosenitraten, und ein Verfahren zu ihrer Herstellung.

Da Cellulosenitrate als Lackrohstoff im trockenen Zustand leicht durch Stoß oder Reibung entzündet werden können, müssen handelsübliche Produkte entweder ein Anfeuchtungsmittel in einer Menge von mindestens 25 Gew.-% enthalten, oder es muß ein gelatinierendes Phlegmatisierungsmittel in einer Konzentration von mindestens 18 Gew.-% eingearbeitet worden sein, um damit die Entzündungsgefahr bei der Lagerung und der Handhabung sowie beim Transport zu verringern. Als derartige Anfeuchtungsmittel finden z.B. Ethanol, Isopropanol oder n-Butanol, aber auch Wasser Anwendung. Diese Anfeuchtungsmittel können zu erheblichen Problemen bei der Verarbeitung von NC-haltigen Lacken führen, denn die Alkohole stören in den üblichen Adsorptionsanlagen, die zur Emissionsverringerung den Lackieranlagen nachgeschaltet sind. Außerdem können Alkohole beim Einsatz in PUR-Lacken mit den dort eingesetzten Isocyanaten zu niedermolekularen Verbindungen reagieren, die die Qualität des Endproduktes deutlich herabsetzen.

Der Einsatz inerter Lösungsmittel (z.B. Toluol), wie in der DE-A 3 041 085 oder der US-A 3 284 253 beschrieben, löst lediglich das Problem des Einsatzes in Polyurethan-Lacken. Zudem ist die Herstellung mittels eines destillativen Arbeitsschrittes außerordentlich aufwendig und sicherheitstechnisch problematisch. Bei allen mit Lösungsmittel angefeuchteten Cellulosenitraten besteht das Problem der Verdunstung des Lösungsmittels bzw. der inhomogenen Verteilung infolge Absackens des Anfeuchtungsmittels im Faß. Zudem ist die Dosierung, insbesondere die automatische Dosierung, im Produktionsprozeß aufgrund der wolleartigen Struktur dieser Produkte außerordentlich schwierig.

Es wurden daher Verfahren entwickelt, um Cellulosenitrat in Form von Pellets, sog. Chips, anbieten zu können. Hierbei werden Weichmacher als gelatinierendes Phlegmatisierungsmittel eingesetzt. Als derartige Weichmacher fanden bisher Dibutylphthalat und Dioctylphthalat Anwendung. In der DE 1 203 652 wird ein Verfahren zum Aufbringen eines Weichmachers auf wasserfeuchtes Cellulosenitrat beschrieben. Der Weichmacher wird auf das wasserfeuchte Cellulosenitrat aufgedüst und dann bevorzugt bei höheren Temperaturen (>50°C) mechanisch eingearbeitet. Der Weichmacher ist aber immer ungleichmäßig verteilt. Die Endprodukte sind Plättchen unregelmäßiger Größe. Nachfolgend wird das Wasser abgepreßt und die Masse getrocknet. Dieses Verfahren ist aber nur für niedrigviskose, gut gelatinierende Weichmacher, wie Dibutylphthalat, geeignet. Die ungleichmäßige Auftragung des Weichmachers führt auch zu Verblockungsneigung und erhöht außerdem die Zündgefahr der Produkte. Die Produkte sind hornartig und außerordentlich schwer löslich.

In der DOS 1 470 860 und der DOS 1 570 121 wird die Auftragung des im Vergleich zu Dibutylphthalat höherviskosen, schlechter gelatinierenden Dioctylphthalats beschrieben. In diesem Fall wird der Weichmacher, gelöst in einem Lösungsmittel, in das Cellulosenitrat eingearbeitet. Dieses Verfahren erfordert eine aufwendige Lösungsmittelrückgewinnung und führt zu gleichfalls verblockenden und außerordentlich schwer löslichen Produkten.

In der FR 2 112 705 und der DE 2 215 624 wird ein Verfahren zur Herstellung polyolmodifizierter Cellulosenitrate beschrieben, wobei eine wäßrige Emulsion eines Polyols mit einer wäßrigen Cellulosenitratdispersion in Gegenwart einer großen Menge Emulgator (bis 5 Gew.-%) vermischt und erhitzt wird. Nach der Filtration wird der Filterkuchen auf eine gewünschte Schichtdicke kalandriert und zu Schuppen verarbeitet. Diese Schuppen wurden auf die Verwendung als Polyurethanpräpolymere beschränkt. Durch das Kalandrierverfahren entstehen schwer lösliche Produkte. Die enthaltenen Emulgatoren verschlechtern die Lackeigenschaften, insbesondere die Wasserfestigkeit.

Nach dem in der DE 2 100 412 beschriebenen Verfahren wird ein Polyol in einem Gemisch von Wasser und Lösungsmittel in Gegenwart eines Schutzkolloids auf das Cellulosenitrat aufgebracht. Wasser und Lösungsmittel müssen dann aufwendig abdestilliert werden.

In der DE 2 338 852 wird ein Verfahren zur Herstellung von plastifiziertem Cellulosenitrat beschrieben, bei dem eine Suspension von Dibutylphthalat oder Dioctylphthalat unter Rühren in einer Zeit von 5 bis 6 h auf das Cellulosenitrat aufgebracht wird. Die Auftragszeit ist für eine wirtschaftliche Nutzung des Verfahrens wesentlich zu lang.

Obwohl eine unwirtschaftlich lange Auftragszeit eingehalten werden muß, ist das Filtrat trübe und der Weichmacher inhomogen im Produkt verteilt (siehe Vergleichsbeispiel (3)).

In der CH 418 951 ist ein Verfahren zur Einarbeitung von Dibutylphthalat in Cellulosenitrat beschrieben, bei dem eine wäßrige Suspension von Cellulosenitrat mit einer wäßrigen Weichmacheremulsion versetzt wird. Dabei ist eine außerordentlich lange Einwirkungszeit von 1 bis 2 h notwendig. Die anschließende Entwässerung des Produktes erfolgt durch Abschleudern und Walzen unter gleichzeitiger Verdichtung. Die anfallende Masse muß zerkleinert werden. Die Chips weisen die gleiche schlechte Löslichkeit auf wie die ebenfalls durch Walzen hergestellten handelsüblichen Produkte nach DE 1 203 652 und DE 1 470 860 (s.o. und Beispiele).

In der US 2 109 599 wird ein Verfahren zur Herstellung von gelatiniertem Cellulosenitrat durch Einarbeiten von Polymethylmethacrylat und Dibutylphthalat mit Hilfe von heißen Walzen, nachdem das Polymer-Weichmacher-Gemisch vorher in einem Kneter auf alkoholfeuchtes Cellulosenitrat aufgebracht wurde, beschrieben. Bei diesem Verfahren wird der Alkohol an den heißen Walzen verdampft, so daß eine aufwendige Lösungsmittelrückgewinnung zu erfolgen hat. Außerdem ist die thermischmechanische Belastung des Materials sehr hoch. Dies führt zu hochverdichteten, sehr schwer löslichen Produkten.

Die oben beschriebenen Cellulosenitratprodukte sind aufgrund unzureichender Rieselfähigkeit mit modernen, automatisierten Dosiersystemen nicht zu verarbeiten.

Gegenstand der vorliegenden Erfindung sind schelllösliche, blockfeste, mit Lackbindemitteln bzw. Lackbestandteilen phlegmatisierte Celluloseestergranulate, insbesondere Cellulosenitrate, die oben aufgeführte Nachteile nicht aufweisen, sowie ein Verfahren zu ihrer Herstellung, das bevorzugt in den normalen Herstellungsprozeß des Cellulosenitrats nach der Druckkochung (zur Reduzierung des Molekulargewichts) und einer bis zum pH-Wert von 2,5 bis 3,5 durchgeführten Vorstabilisierung integriert werden kann.

Zur Erzeugung der erfindungsgemäßen phlegmatisierten Celluloseester werden bevorzugt Cellulosenitrate unterschiedlicher Viskositätsstufen mit einem Stickstoffgehalt von 10 bis 12,6 Gew.-% eingesetzt, besonders bevorzugt Cellulosenitrate, die dem normalen Herstellprozeß schon nach der Druckkochung entnommen sind und noch einen sauren pH-Wert aufweisen. Jedoch können auch andere Celluloseester, wie Celluloseacetobutyrat oder Celluloseacetat, verwendet werden.

Bevorzugte Produkte sind solche, die aus 82 bis 40 Gew.-%, vorzugsweise 82 bis 60 Gew.-% Cellulosenitrat, und 18 bis 60 Gew.-%, vorzugsweise 18 bis 40 Gew.-%, eines Lackbindemittels bzw. eines anderen Lackbestandteils, wobei Lösungsmittel ausgeschlossen bleiben, bestehen. Als Lackbindemittel sind alle flüssigen cellulosenitratkompatiblen Harze geeignet, z.B. aus folgenden Produktgruppen:
Alkydharze,
gesättigte Polyester,
ungesättigte Polyester,
OH-gruppenhaltige Polyester,
Polyesteracrylate,
Polyacrylate,
Ketonharze,
Maleinatharze,
Polyurethanharze,
Epoxidharze,
Silikonharze,
Mischungen dieser Harze,
insbesondere selbstemulgierende Harze.

Andere geeignete Lackbestandteile sind z.B. Weichmacher, wie Phthalsäureester, insbesondere Phthalsäureester mit Alkoholen, die mehr als 7 C-Atome aufweisen und bisher nur unter Einsatz von Lösungsmitteln verarbeitet werden konnten, wie Dioctylphthalat, Diisononylphthalat, Diisodecylphthalat; Adipinsäureester, insbesondere Adipinsäureester mit Alkoholresten die mehr als 7 C-Atome aufweisen, wie Dioctyladipat; Polymerweichmacher, insbesondere Polyester aus Dicarbonsäuren und mehrwertigen Alkoholen, wie z.B. die Polyester aus Adipin-, Sebacin- oder Phthalsäure mit Butandiol, Propylenglykol oder Trimethylolpropan, gegebenenfalls auch modifiziert mit monofunktionellen Alkoholen und Säuren, Phosphorsäureester, wie Tri-n-butylphosphat, Tri-(2-ethylhexyl)-phosphat, Trikresylphosphat, Acelainsäureester, Ester höherer Fettsäuren, Glykolsäureester, Trimethylitsäureester, wie Trioctyltrimethylat, Sulfonsäureester, wie Dialkyl-(C₁₃-C₂₁)-sulfonester von Phenol-Kresol-Gemischen oder Ester der p-Toluolsulfonsäure mit Phenolen, Zitronensäureester, wie Acetyltriethylcitrat oder Acetyl-tri-2-ethylhexylcitrat, Acetale, Ketone, Sulfonsäureamide, wie Benzolsulfonsäure-N-methylamid, epoxidierte Weichmacher, insbesondere epoxidierte Ester natürlicher Fettsäuren und epoxidierte Triglyzeride, wie epoxidiertes Sojabohnen- oder Leinöl, Naturharzester, wie die Ester von Kolophonium bzw. hydriertem Kolophonium, Zuckerderivate, wie Saccharoseacetoisobutyrat, Polyacprolactone, polymerisierbare Weichmacher und flammhemmende Weichmacher, wie Trichlorpropylphosphat, Trichlorethylphosphat oder Diphenyloctylphosphat sowie ethoxylierte Derivate der oben aufgeführten Produkte, wie z.B. ethoxylierte Phosphorsäureester, sowie Mischungen von Sachbestandteilen wie Harzen und Weichmachern.

Die Herstellung der erfindungsgemäßen Granulate erfolgt durch Zugabe einer Emulsion eines Lackbestandteiles zu einer wäßrigen Aufschlämmung des Cellulosenitrats.

Jedoch ist auch der umgekehrte Weg der Zugabe von festem Cellulosenitrat oder einer Cellulosenitrataufschlämmung zur Emulsion der Lackbestandteile möglich.

Bevorzugt ist die Zugabe einer konzentrierten Emulsion zur Cellulosenitrataufschlämmung, insbesondere zu einer Cellulosenitrataufschlämmung, die im normalen Cellulosenitrat-Herstellungsprozeß nach der Druckkochung im Waschprozeß anfällt und noch einen sauren pH-Wert aufweist. Für den Fachmann war nicht voraussehbar, daß im sauren Medium eine besonders gute Granulatbildung mit einem vollständigen Umsatz, gekennzeichnet durch ein klares Filtrat, erfolgt und die Produkte eine ausgezeichnete Stabilität aufweisen; denn bisher wurde davon ausgegangen, daß Cellulosenitrat bis zur Neutralität gewaschen werden muß, und erst dann weiterverarbeitet werden kann, um gute Stabilitätswerte zu erreichen. In einigen Fällen können die erfindungsgemäßen Effekte auch bei einem höheren als dem bevorzugten pH-Bereich von 2,5 bis 3,5 erhalten werden.

Die Emulsion wird in diese Aufschlämmung durch Rühren eingearbeitet. Häufig kann auf eine Temperaturerhöhung zur Verbesserung der Gelatinierung verzichtet werden. Daran schließt sich eine Abtrennung der Granulate mit gegebenenfalls notwendiger Trocknung an.

Die Emulgierung kann durch einfaches Verrühren der Lackbestandteile, der Emulgatoren sowie des Wassers erfolgen, aber auch durch den Einsatz von Dissolvern. Ultraschallmischern, Düsenmischern, Durchflußdispergatoren sowie durch Kombinationen dieser Methoden.

Die Temperatur kann während der Emulgierung konstant sein oder variiert werden. Sie kann im Bereich von 5 bis 100°C liegen. Bevorzugt werden Temperaturen von 20 bis 80°C.

Als Emulgatoren eignen sich bekannte nicht-ionische oder ionische Tenside oder Mischungen aus diesen. Geeignete nicht-ionische Emulgatoren sind z.B.: ethoxylierte und/oder propoxylierte Alkylphenole, insbesondere ethoxylierte und/oder propoxylierte Nonylphenole, Fettalkoholester, ethoxylierte und/oder propoxylierte Fettalkohole, Fettsäureester, Polyglykolether von Polypropylenglykol, ethoxylierte und/oder propoxylierte Fette und Öle, ethoxylierte und/oder propoxylierte kondensierte Phenole, ethoxylierte und/oder propoxylierte kondensierte Amine, ethoxylierte und/oder propoxylierte Polysiloxane und Mischungen aus diesen.

Als anionische Emulgatoren sind z.B. geeignet: Sulfonate, wie Fettsäuresulfonate, sulfonierte Ester, perfluorierte Alkylsulfonate, Alkylbenzolsulfonate und kondensierte Sulfonate, Sulfate, wie sulfatierte Alkohole, sulfatierte Ester, sulfatierte Alkanolamide, sulfatierte Mono- und Polyglyceride und sulfatierte Polyglykolether oder auch die entsprechenden Phosphate sowie komplexe Phosphate.

Besonders bevorzugt sind nicht-ionische und anionische Emulgatoren sowie Mischungen aus nicht-ionischen und anionischen Emulgatoren in Konzentrationen von 0 bis 1 Gew.-%, insbesondere von 0,05 bis 0,5 Gew.-%, bezogen auf das wasserfreie Lackbindemittelgranulat.

Bei gut emulgierbaren Substanzen kann auf den Einsatz von Emulgatoren ganz verzichtet werden.

Die Vermischung der Emulsion mit dem wäßrigen Cellulosenitrat kann in einem normalen Rührbehälter bei Temperaturen zwischen 0 und 100°C, bevorzugt bei Temperaturen zwischen 20 und 80°C stattfinden. Die Aufbringung kann unter normalem Druck, erhöhtem Druck oder vermindertem Druck stattfinden. Besonders bevorzugt ist die Aufbringung der Emulsion auf die wäßrige Cellulosenitratmischung unter vermindertem Druck. Dieser Verfahrensschritt führt zu einem sehr homogenen Aufziehen des Lackbestandteils auf die Celluloseesterfaser und damit zu einem besonders homogenen Produkt.

Nach erfolgtem Aufziehen des Lackbestandteils auf der Celluloseesterfaser, das durch das Verschwinden der Trübung der wäßrigen Phase gekennzeichnet ist, erfolgt eine Separation der Partikel mit normalen flüssig-fest-Separationsverfahren, wie Zentrifugations-, Filtrations- oder Dekanterverfahren.

Das vollständige Aufziehen des Lackbestandteils erfolgt nach dem Erreichen der Aufziehtemperatur innerhalb von maximal 30 min, gekennzeichnet durch das Verschwinden der Trübung in der wäßrigen Phase.

Die feuchten Granulate können in üblichen Trocknungsanlagen, wie Horden-, Band- oder Wirbelbetttrocknern getrocknet werden. Es werden damit rieselfähige und wasserfreie Granulate erzeugt.

Die erfindungsgemäßen Celluloseester-Lackbestandteilgranulate, die auch mit anderen Lackbindemitteln bzw. Lackadditiven kombiniert werden können sind je nach Zusammensetzung der Granulate für Lacke unterschiedlicher Anwendungsgebiete, wie z.B. für die Holz-, Metall-, Kunststoff-, Papier- oder Lederlacke sowie auch für die Lackierung magnetischer Datenträger oder mineralischer Untergründe geeignet.

Über mögliche Kombinationspartner für diese Granulate liegt ein umfangreiches Schrifttum vor. Als Beispiel ist aufgeführt: "Karsten, Lackrohstofftablennen, 8. Auflage, Kurt R. Vincenz Verlag, Hannover, 1987".

Es können transparente oder pigmentierte Lacke hergestellt werden.

### Beispiele

### Untersuchungsmethoden:

1. Bestimmung der Verpuffungstemperatur
   Diese Bestimmung erfolgt gemäß Anlage I der internationalen Ordnung für die Beförderung gefährlicher Güter mit der Eisenbahn (RID), Anhang 1.
   0,2 g getrocknete Cellulosenitratprodukte werden in einem Reagenzglas von 125 ml Höhe, 15 mm lichter Weite und 0,5 mm Wandstärke in ein auf 100°C erwärmtes Woodsche's Metallbad gebracht. Das Reagenzglas muß genau 20 mm in das Bad hineintauchen. Ferner muß sich die Mitte der Quecksilberkugel des benutzten Thermometers in gleicher Höhe mit dem Boden des Reagenzglases befinden. Durch Erhitzen wird die Temperatur des Bades je Minute um 5°C gesteigert, so daß nach 14 min 170°C erreicht werden.
   Handelsübliche Cellulosenitrat-Chips haben eine Verpuffungstemperatur oberhalb 170°C.
2. Abspaltung mittels Bergmann-Junk-Probe (Zeitschrift für Angewandte Chemie, 1904, S. 982 und 1074)
   In einem konstant auf 132°C gehaltenen sog. Abspaltungsapparat nach Bergmann-Junk erhitzt man die mit einer 2 g trockenem Cellulosenitrat entsprechenden Probemenge beschickten Röhre 2 Stunden lang und ermittelt die Menge der entwickelten nitrosen Gase nach Reduktion zu Stickstoffmonoxid.
   Stabil im Sinne dieses Tests sind Cellulosenitratprodukte, die pro 1 g enthaltenes Cellulosenitrat nicht mehr als 2,5 ml Stickstoffmonoxid abgeben.
3. Lösezeit
   Unter Rühren mit einem Dissolver (Dissolverscheibe, Durchmesser; 40 mm) bei 930 Upm werden zu 255 g Ethylacetat 45 g des Cellulosenitratproduktes schnell zugegeben. Die ermittelte Zeit bis zur homogenen Lösung ist die Lösezeit.
   Handelsübliche Cellulosenitrat-Chips mit 18 % Dibutylphthalat, hergestellt nach dem Verfahren DE 1 203 652 und DE 1 470 860, weisen Lösezeiten von 40 bis 60 min auf.
4. Transmission
   Zur Charakterisierung der Trübung des bei der erfindungsgemäßen Herstellung anfallenden Filtrates wird die Transmission bei einer Wellenlänge von 600 mm und einer Schichtdicke von 1 mm bestimmt.

### Beispiel 1

35 g Di-iso-nonyladipat wird mit 0,175 g einer wäßrigen Lösung eines Alkylsulfosuccinates (Bevaloid 1299, Bevaloid Ltd., UK) gemischt. Durch Zugabe von 35 g Wasser wird unter Einsatz eines Ultraturax bei Raumtemperatur eine Emulsion hergestellt. Anschließend wird die Emulsion bei niedriger Drehzahl noch weitere 5 min nachemulgiert.

Eine Suspension von 49,3 g Cellulosenitrat der Normtype 34 E, in 238 g Wasser (pH 3,2) wird in einem Rührgefäß vorgelegt. Diese Mischung wird mit 23,4 g der oben beschriebenen Emulsion versetzt und auf 60°C unter Rühren erwärmt und 15 min bei dieser Temperatur belassen. Nach Abkühlen auf 40°C wird die entstandene grobkörnige Suspension filtriert und der Feststoff in einem Wirbelbett-Trockner getrocknet. Dieses Cellulosenitrat- und Di-isononyladipat-enthaltende Granulat ist freifließend und in Ethylacetat klar löslich Das Filtrat ist völlig klar.

Die Werte des Stabilitätstests (Bergmann-Junk-Probe) und Verpuffungstemperatur sind sehr gut. Die Lösezeit ist wesentlich geringer als bei handelsüblichen Cellulosenitrat-Chips (siehe Untersuchungsmethoden, Lösezeit).

| | |
|---|---|
| Ausbeute: | 99,1 % |
| Partikeldurchmesser: | 0,2 - 1 mm |
| Bergmann-Junk-Probe: | 1,1 ml |
| Verpuffungstemperatur: | 184 - 185°C |
| Lösezeit: | 2,5 min |
| Aussehen des Filtrates: | klar |
| Transmission des Filtrates: | 98,7 |

### Beispiel 2

Eine Suspension aus 50,0 g Cellulosenitrat des Normtyps 24 E mit 330 g Wasser (pH 3,1) wird mit 23,4 g der in Beispiel 1 beschriebenen Emulsion versetzt. Die weitere Verarbeitung erfolgt wie in Beispiel 1 erläutert. Es entsteht ein grobkörniges, blockfestes Agglomerat, das in Ethylacetat klar-löslich ist.

| | |
|---|---|
| Ausbeute: | 98,2 % |
| Partikeldurchmesser: | 0,5 - 1,5 mm |
| Bergmann-Junk-Probe: | 0,9 ml |
| Verpuffungstemperatur: | 188°C |
| Lösezeit: | 2,75 min |
| Aussehen des Filtrates: | klar |

### Beispiel 3

Eine Suspension aus 50,0 g Cellulosenitrat des Normtyps 12 E in 580 g Wasser (pH 3,1) wird mit 23,4 g der in Beispiel 1 beschriebenen Emulsion versetzt. Die weitere Verarbeitung erfolgt wie in Beispiel 1 beschrieben.

Es entsteht ein Granulat, das in Ethylacetat klarlöslich ist.

| | |
|---|---|
| Ausbeute: | 99,2 % |
| Partikeldurchmesser: | 2 - 3 mm |
| Bergmann-Junk-Probe: | 0,8 ml |
| Verpuffungstemperatur: | 186,0 - 186,5°C |
| Lösezeit: | 10,5 min |
| Aussehen des Filtrates: | klar |

### Beispiel 4

6.650 g Wasser und 0,7 g eines ethoxylierten Nonylphenols mit durchschnittlich 9 EO-Einheiten werden in einem Rührgefäß gemischt. Durch Zugabe von 350 g Di-2-ethylhexylphthalat wird unter Rühren mit einem Dissolver bei Raumtemperatur eine Emulsion hergestellt.

Zu 2.046,8 g feuchtem Cellulosenitrat der Normtype 34 E mit einem Wassergehalt von 32,6 % (pH 3,0) wird in einem Rührgefäß die oben beschriebene Emulsion zugegeben. Diese Mischung wird unter langsamem Rühren auf 60°C erwärmt und 15 min bei dieser Temperatur belassen. Nach dem Abkühlen auf 40°C wird die entstandene grobkörnige Suspension filtriert und der Feststoff in einem Umlufttrockner getrocknet. Das entstehende Granulat ist frei fließend und in Ethylacetat klar-löslich.

Es entsteht ein Granulat, das in Ethylacetat klar-löslich ist.

| | |
|---|---|
| Ausbeute: | 99,1 % |
| Partikeldurchmesser: | 0,3 - 0,7 mm |
| Bergmann-Junk-Probe: | 0,6 ml |
| Verpuffungstemperatur: | 184°C |
| Lösezeit: | 2,0 min |
| Aussehen des Filtrates: | klar |

### Beispiel 5

Eine Suspension von 1.200 g Cellulosenitrat des Normtyps 27 E in 1.234 g Wasser (pH 3,5) wird in einem Rührgefäß vorgelegt und mit 433 g einer Emulsion eines mittelöligen Alkydharzes (Jägalyd WE 57 der Fa. Jäger, 65 %ig in Wasser) versetzt.

Nach 15 min wird die entstandene Suspension filtriert und der Feststoff in einem Wirbelbett-Trockner getrocknet. Das entstehende Granulat ist freifließend und in Ethylacetat klar-löslich.

| | |
|---|---|
| Ausbeute: | 99,0 % |
| Partikeldurchmesser: | 0,4 - 0,7 mm |
| Bergmann-Junk-Probe: | 1,0 ml |
| Verpuffungstemperatur: | 180,5°C |
| Lösezeit: | 4,5 min |
| Aussehen des Filtrates: | klar |
| Transmission des Filtrates: | 99,1 % |

### Beispiel 6

35 g Wasser werden mit 0,175 g ethoxyliertem, primärem C₁₃/C₁₅-Alkohol mit durchschnittlich 11 Ethylenoxideinheiten gemischt. Es wird eine Emulsion durch langsame Zugabe von 35 g Sucroseacetoisobutyrat bei 60°C unter starker Scherung hergestellt.

Zu einer Suspension von 50 g Cellulosenitrat der Normtype 34 E in 237 gv Wasser (pH 2,9) in einem Rührgefäß werden 23,4 g der oben beschriebenen Emulsion gegeben, die Mischung wird auf 60°C unter Rühren erwärmt und 15 min bei dieser Temperatur belassen. Nach Abkühlen auf 40°C wird die entstandene grobkörnige Suspension filtriert und der Feststoff in einem Wirbelbett-Trockner getrocknet. Dieses Granulat ist freifließend und in Ethylacetat klar-löslich.

| | |
|---|---|
| Ausbeute: | |
| Partikeldurchmesser: | 0,3 - 0,7 mm |
| Bergmann-Junk-Probe: | 0,9 ml |
| Verpuffungstemperatur: | 179°C |
| Lösezeit: | 2,0 min |
| Aussehen des Filtrates: | klar |
| Transmission des Filtrates: | 98,7 % |

### Beispiel 7

70 g Wasser werden mit 0,35 g ethoxyliertem Nonylphenol mit durchschnittlich 50 EO-Einheiten vermischt. Durch Zugabe von 23,3 g epoxidiertem Sojabohnenöl wird unter starker Scherung bei Raumtemperatur eine Emulsion hergestellt,

Eine Suspension aus 50 g Cellulosenitrat der Normtype 32 E in 237 g Wasser (pH 2,9) wird in einem Rührgefäß vorgelegt, und mit 23,5 g der oben beschriebenen Emulsion versetzt. Die Suspension wird 15 min bei Raumtemperatur gerührt, danach filtriert und der Feststoff in einem Umluftofen getrocknet. Es wird ein freifließendes, in Ethylacetat klar-lösliches Granulat erhalten.

| | |
|---|---|
| Ausbeute: | 99,6 % |
| Partikeldurchmesser: | 0,3 - 0,8 mm |
| Bergmann-Junk-Probe: | 0,8 ml |
| Verpuffungstemperatur: | 181°C |
| Lösezeit: | 4,5 min |
| Aussehen des Filtrates: | klar |
| Transmission des Filtrates: | 99,2 |

### Beispiel 8

35 g Wasser werden mit 0,175 g eines ethoxylierten Nonylphenols mit durchschnittlich 9 Mol Ethylenoxid pro Mol Emulgator versetzt. Durch Zugabe von 35 g Di-iso-nonylphthalat wird unter starker Scherung bei Raumtemperatur eine Emulsion hergestellt.

Eine Suspension aus 50 g Cellulosenitrat der Normtype 34 E in 237 g Wasser (pH 2,9) wird in einem Rührgefäß mit 23,4 g der oben beschriebenen Emulsion versetzt und auf 60°C unter Rühren erwärmt und 15 min bei der Temperatur belassen. Nach Abkühlen auf 40°C wird die entstandene grobkörnige Suspension filtriert und der Feststoff in einem Wirbelbett-Trockner getrocknet. Das entstandene Granulat ist freifließend und in Ethylacetat klar-löslich,

| | |
|---|---|
| Ausbeute: | 99,5 % |
| Partikeldurchmesser: | 0,5 - 0,9 mm |
| Bergmann-Junk-Probe: | 0,8 ml |
| Verpuffungstemperatur: | 179°C |
| Lösezeit: | 3,5 min |
| Aussehen des Filtrates: | klar |

### Beispiel 9

35 g Wasser werden mit 1,4 g eines Gemischs aus Ca-Dodecylbenzolsulfonat und Polyoxyalkylenarylethern (ATLOX 4880 B der ICI Specialty Chemicals, Essen) versetzt, Dann wird eine Emulsion durch langsame Zugabe von 35 g Phthalsäurepolyester (Ultramoll PP der Bayer AG, Leverkusen) hergestellt.

Eine Suspension aus 50 g Cellulosenitrat der Normtype 34 E in 237 g Wasser (pH 3,1) wird in einem Rührgefäß mit 23,4 g der oben beschriebenen Emulsion versetzt und auf 60°C unter Rühren erwärmt und 15 min bei dieser Temperatur belassen. Nach Abkühlen auf 40°C wird die entstandene grobkörnige Suspension filtriert und der Feststoff in einem Wirbelbett-Trockner getrocknet. Das entstandene Granulat ist freifließend und in Ethylacetatester klar-löslich.

| | |
|---|---|
| Ausbeute: | 98,9 % |
| Partikeldurchmesser: | 0,5 - 0,9 mm |
| Bergmann-Junk-Probe: | 0,6 ml |
| Verpuffungstemperatur: | 178°C |
| Lösezeit: | 4,0 min |
| Aussehen des Filtrates: | klar |

### Beispiel 10

70 g Wasser werden mit 0,35 g ethoxyliertem Nonylphenol mit 50 Mol EO-Einheiten vermischt, Dann wird eine Emulsion durch langsame Zugabe von 23,3 g Diphenyloctylphosphat (Disflamoll der Bayer AG) im Dissolver bei Raumtemperatur hergestellt.

Eine Suspension aus 50 g Cellulosenitrat der Normtype 32 E in 237 g Wasser (pH 3,2) wird in einem Rührgefäß mit 23,5 g der oben beschriebenen Emulsion versetzt. Die Suspension wird 15 min bei Raumtemperatur gerührt, danach filtriert und der Feststoff in einem Umluftofen getrocknet. Es wird ein freifließendes, in Ethylacetat klar-lösliches Granulat erhalten.

| | |
|---|---|
| Ausbeute: | 99,9 % |
| Partikeldurchmesser: | 0,6 - 0,9 mm |
| Bergmann-Junk-Probe: | 0,6 ml |
| Verpuffungstemperatur: | 180°C |
| Lösezeit: | 2,5 min |
| Aussehen des Filtrates: | klar |

### Beispiel 11

35 g Wasser werden mit 0,035 g einer Mischung aus Ca-Dodecylbenzolsulfonat und Polyoxyethylenpolyestern (ATLOX 4851 B der ICI Specialty Chemicals, Essen) versetzt. Dann wird eine Emulsion durch langsame Zugabe von 35 g Trichlorpropylphosphat im Dissolver hergestellt.

Eine Suspension aus 50 g Cellulosenitrat der Normtype 32 E in 237 g Wasser (pH 2,5) wird in einem Rührgefäß mit 23,4 g der oben beschriebenen Emulsion versetzt. Nach 15 min wird die entstandene grobkörnige Suspension filtriert und der Feststoff in einem Wirbelbett-Trockner getrocknet. Das entstandene Granulat ist freifließend und in Ethylacetat klar-löslich.

| | |
|---|---|
| Ausbeute: | 99,3 % |
| Partikeldurchmesser: | 0,4 - 0,7 mm |
| Bergmann-Junk-Probe: | 0,8 ml |
| Verpuffungstemperatur: | 177 - 178°C |
| Lösezeit: | 3,0 min |
| Aussehen des Filtrates: | klar |
| Transmission des Filtrates: | 98,2 % |

### Vergleichsbeispiel 1

Das Beispiel 11 wird mit einer Cellulosenitratsuspension mit dem pH-Wert 7,0 wiederholt. Das Filtrat ist trübe, und das Granulat in Ethylacetat nur trübe löslich. Die Ausbeute ist ebenfalls schlechter als in Beispiel 11.

| | |
|---|---|
| Ausbeute: | 96,8 % |
| Partikeldurchmesser: | 0,5 - 0,7 mm |
| Bergmann-Junk-Probe: | 1,1 ml |
| Verpuffungstemperatur: | 175°C |
| Lösezeit: | 3,2 min |
| Aussehen des Filtrates: | trübe |
| Transmission des Filtrates: | 9 % |

### Vergleichsbeispiel 2

Das Beispiel 7 wird mit einer Cellulosenitratsuspension mit dem pH-Wert 7,0 wiederholt. Das Filtrat ist trübe und das Granulat in Ethylacetat nur löslich Die Ausbeute ist ebenfalls schlechter als in Beispiel 7,

| | |
|---|---|
| Ausbeute: | 97,1 % |
| Partikeldurchmesser: | 0,4 - 0,8 mm |
| Bergmann-Junk-Probe: | 0,9 ml |
| Verpuffungstemperatur: | 180°C |
| Lösezeit: | 4,5 min |
| Aussehen des Filtrates: | trübe |
| Transmission des Filtrates: | 16,1 % |

### Vergleichsbeispiel 3

Das Beispiel 1 der DE 233 852 wurde nachgearbeitet. Dabei wurden 20 % Dibutylphthalat, bezogen auf den gesamten Festkörperanteil, eingesetzt. Es wurde ein Cellulosenitrat der Normtype 34 E eingesetzt.

Trotz einer Verweilzeit von 6 Stunden konnte kein vollständiges Aufziehen des Weichmachers auf das Cellulosenitrat erreicht werden. Die wäßrige Phase ist trübe. Zudem wird keine vollständige Granulation des eingesetzten Cellulosenitrats erreicht. Faserbestandteile sind deutlich zu erkennen. Ein derartiges Produkt kann nicht als phlegmatisiertes Cellulosenitrat in den Handel gebracht werden. Aufgrund der ungleichmäßigen Weichmacherbenetzung sind die Meßwerte Bergmann-Junk-Test, Verpuffungstemperatur und Lösezeit nicht exakt bestimmbar.

| | |
|---|---|
| Ausbeute: | 94,3 % |
| Partikeldurchmesser: | 0,3 - 12 mm |
| Aussehen des Filtrates: | stark trübe |
| Transmission des Filtrates: | 6,3 % |

## Patentansprüche

1. Verfahren zur Herstellung rieselfähiger, schnelllöslicher Lackbindemittel-Granulate, dadurch gekennzeichnet, daß Lackbestandteile, insbesondere lackübliche Harze und Weichmacher in wäßriger Emulsion mit einer wäßrigen Suspension von Celluloseestern vermischt und auf den Celluloseesterfasern bei sauren pH-Werten ausgefällt werden und dabei mit diesen ein Granulat bilden, das abgetrennt und getrocknet werden kann.

2. Verfahren nach Anspruch 1, dadurch gekennzeichnet, daß das Aufbringen der Lackbestandteile auf die Celluloseester bei pH-Werten von 2,5 bis 3,5 durchgeführt wird.

3. Verfahren nach Anspruch 1, dadurch gekennzeichnet, daß der Celluloseester bevorzugt Cellulosenitrat ist.

4. Verfahren nach Anspruch 1, dadurch gekennzeichnet, daß nichtionische und anionische Emulgatoren in Konzentrationen von 0 bis 1 Gew.-%, insbesondere von 0,05 bis 0,5 Gew.-%, bezogen auf das wasserfreie Lackbindemittel-Granulat, eingesetzt werden.

## Claims

1. A process for the production of free-flowing, quick-dissolving lacquer binder granules, characterized in that lacquer components, more particularly typical lacquer resins and plasticizers, in the form of an aqueous emulsion are mixed with an aqueous suspension of cellulose ester fibers at acidic pH values and, with the cellulose ester fibers, form granules which can be separated off and dried.

2. A process as claimed in claim 1, characterized in that the lacquer components are applied to the cellulose ester at pH values of 2.5 to 3.5.

3. A process as claimed in claim 1, characterized in that the cellulose ester is preferably cellulose nitrate.

4. A process as claimed in claim 1, characterized in that nonionic and anionic emulsifiers are used in concentrations of 0.1 to 1% by weight and, more particularly, in concentrations of 0.05 to 0.5% by weight, based on the water-free lacquer binder granules.

## Revendications

1. Procédé pour la préparation de produits de granulation de liants de laques, de vernis ou de peintures à solubilité rapide, aptes à l'écoulement, caractérisé en ce qu'on mélange des constituants de laques, de vernis ou de peintures, en particulier des résines et des plastifiants habituels de laques, de vernis ou de peintures, en émulsion aqueuse avec une suspension aqueuse d'esters cellulosiques, et on soumet à une précipitation sur les fibres d'esters cellulosiques à des valeurs de pH acides et on obtient en l'occurrence avec ces dernières un produit de granulation que l'on peut séparer et sécher.

2. Procédé selon la revendication 1, caractérisé en ce qu'on effectue l'application du constituant de laque, de vernis ou de peinture sur les esters cellulosiques à des valeurs de pH de 2,5 à 3,5.

3. Procédé selon la revendication 1, caractérisé en ce que l'ester cellulosique représente de préférence le nitrate de cellulose.

4. Procédé selon la revendication 1, caractérisé en ce qu'on met en oeuvre des émulsifiants non ioniques et anioniques dans des concentrations de 0 à 1 % en poids, en particulier de 0,05 à 0,5 % en poids, rapportées au poids du produit de granulation anhydre de liant de laque, de vernis ou de peinture.
